# EUROPÄISCHE PATENTSCHRIFT

(11) **EP 1 283 273 B1**
(45) Veröffentlichungstag und Bekanntmachung des Hinweises auf die Patenterteilung: **30.03.2005**
(21) Anmeldenummer: 02013044.9
(22) Anmeldetag: 13.06.2002
(51) Int. Cl.: C22B 5/16

(54) **Vorrichtung zum Destillieren von Metallschmelzen**
Apparatus for distilling molten metal
Dispositif de distillation de métaux fondus

(30) Priorität: 03.08.2001 DE 10134286
(43) Veröffentlichungstag der Anmeldung: 12.02.2003
(73) Patentinhaber: ALD Vacuum Technologies AG, 63450 Hanau (DE)
(72) Erfinder: Popov, Ivaylo, 63450 Hanau (DE); Kemmer, Hans-Jürgen, 63322 Rödermark (DE); Scholz, Harald, 63517 Rodenbach (DE)
(74) Vertreter: Hebing, Norbert

(56) Entgegenhaltungen:
- BE-A- 699 488
- US-A- 2 430 389

## Beschreibung

Die Erfindung betrifft eine Vorrichtung zum Destillieren von Metallschmelzen mit einem topfförmigen unteren Gehäuseteil zur Aufnahme eines von einer Heizspirale umschlossenen Schmelztiegels und mit einem mit dem unteren Gehäuseteil druckdicht verbindbaren haubenförmigen oberen Gehäuseteil.

In metallverarbeitenden Industrieunternehmen fallen ständig große Mengen von Materialresten an, die eine Vielzahl von unterschiedlichen Legierungsmetallen enthalten, wobei diese Legierungsmetalle zum großen Teil in geringen oder wechselnden Mischungsverhältnissen im Werkstoff enthalten sind. Nicht zuletzt aus wirtschaftlichen Erwägungen ist es erforderlich, diese Materialreste und technischen Erzeugnisse einer Wiederaufbereitung zuzuführen. Hierbei macht man sich die Tatsache zunutze, dass die Legierungsmetalle unterschiedliche Schmelzpunkte aufweisen und sich die Metallegierungen beim Einschmelzen entmischen und bei verschiedenen Temperaturen sieden bzw. verdampfen. Besteht eine Legierung beispielsweise aus Kupfer und Zink (Messing), so schmilzt das Kupfer bei 1083°C und das mit dem Kupfer vermischte Zink bei 419°C, wobei das Zink bereits bei 207 C und 760 mm QS seinen Siedepunkt erreicht. Gemische von verschiedenen Metallen mit verschiedenen Siedepunkten können so durch Destillation und durch anschließende Kondensation voneinander getrennt, d.h. wiederaufbereitet werden.

So hat man bereits Vorrichtungen zum Destillieren und Kondensieren von Metallschmelzen vorgeschlagen, die aus einem Schmelztiegel bestehen, der zusammen mit einer Heizspirale in einer Vakuumkammer angeordnet ist, wobei oberhalb des Schmelztiegels eine Vorrichtung zum Niederschlagen des aus der Schmelze austretenden Metalldampfes vorgesehen ist. Die bekannten Vorrichtungen dieser Art haben jedoch den Nachteil, dass die in der Legierung enthaltenen Metalle sich nicht so vollständig voneinander trennen lassen, dass das im Tiegel verbleibende Metall - also das Metall mit dem höchsten Schmelzpunkt - in vollständig reiner Form anfällt.

Bekannt ist auch eine Einrichtung zum Einschmelzen von Schrott und Abfällen aus Nicht-Eisenmetallen mit einem Ofen zur Aufnahme eines Schmelztiegels, einer den Tiegel abdeckenden Haube, einem an die Haube angeschlossenen Vorratsbehälter für einzuschmelzendes Gut, einer Beschickungseinrichtung und einer an die Haube angeschlossenen Absaugeinrichtung (DE 33 37 657 C2), wobei die Haube zwischen der Abdeckstellung und einer seitlichen Tiegelfreigabestellung verfahrbar ist und eine in der Abdeckstellung zur Wirkung kommende Abdichtungseinrichtung zwischen der Haube und dem Tiegel vorgesehen ist und der Vorratsbehälter als vakuumdicht verschließbarer Chargenbehälter ausgebildet und vakuumdicht mit der Haube verbunden ist und die Absaugeinrichtung eine Vakuumpumpe aufweist.

Bekannt ist weiterhin eine Vorrichtung zur gleichzeitigen Trennung leicht verdampfbarer Metalle, einschließlich Zink und Blei, von weniger flüchtigen Metallen, wie Kupfer von Materialresten beispielsweise aus Metallschmelzen, bestehend aus einem Reaktor mit einer Reaktorkammer und einer oberen Zufuhrkammer und einer beide Kammern verbindenden sich vertikal erstreckenden Röhre, wobei die Reaktorkammer an eine Sauerstoffquelle angeschlossen und von einem Plasma-Generator aufheizbar ist und die Zufuhrkammer über eine Rohrleitung mit einem Kondensator mit Gasauslaß in Verbindung steht und mit einer Schleuse zum Einfüllen der Charge versehen ist (GB 22 10 629 A). Das in die Röhre eingefüllte Gut wird vom Plasma-Generator aufgeschmolzen, wobei die flüchtigen Bestandteile aus der Reaktorkammer durch das Gut in der Röhre bis in die Zufuhrkammer aufsteigen und dort oberhalb der eingefüllten Charge eine Wolke bilden, wobei ein Teil der flüchtigen Bestandteile über die Rohrleitung bis in den Kondensator aufsteigen.

Bekannt ist schließlich ein Verfahren zum Sammeln eines Metalls aus Gasen, die im wesentlichen aus einem Dampf dieses Metalls bestehen, bei dem eine adiabatische Expansion der Gase in einer Laval-Düse erzeugt wird, um eine Strömung auszubilden, deren kinetische Energie aufgrund des Verlusts an Enthalpie der Strömung und deren Umwandlung in die kinetische Energie so groß ist, daß der Dampf des Metalls auf einen Druck expandiert und auf eine Temperatur herabgekühlt wird, die niedriger als der Siedepunkt des Metalls bei dem Druck ist, wobei die Strömung in ein in einem Aufnahmebehälter enthaltenes Bad geschmolzenen Metalls derselben Art wie der Metalldampf geblasen wird (EP 124 635 B1).

Der vorliegenden Erfindung liegt die Aufgabe zugrunde, eine Vorrichtung zu schaffen, die das vollständige Trennen von Legierungsbestandteilen ermöglicht.
Die Vorrichtung soll außerdem einfach im Aufbau und möglichst universell einsetzbar sein.

Diese Aufgabe wird erfindungsgemäß gelöst gemäß Anspruch 1. Es sind sowohl das untere als auch das obere Gehäuseteil an eine Vakuumquelle anschließbar, wobei das obere Gehäuseteil den Metalldampfkondensator in Gestalt eines aus einem Blechzuschnitt geformten Kegelstumpfs aufweist, dessen dem Schmelztiegel zugewandter vom größeren Grundkreis gebildeter unterer Rand sich oberhalb einer kreisring- oder torusförmigen Abtropfrinne oder Abtropfschale befindet, wobei ein kugelschalenförmiges oder kegelstumpfförmiges Metalldampfprallelement im oberen Teil des Metalldampfkondensators, nahe dem Brennpunkt seiner kegelstumpfförmigen Mantelfläche angeordnet ist, wobei sich die Mantelfläche des Metalldampfprallelements mit geringem Abstand zur Innenfläche des Metalldampfkondensators erstreckt.

Vorzugsweise ist der Metalldampfkondensator an seinem, dem Schmelztiegel zugewandten unteren Rand, mit einer Abtropfkante in Gestalt eines, mit dem Blechzuschnitt fest verbundenen, kreiszylindrischen Rings versehen, dessen dem Schmelztiegel zugewandte Randpartie um ein geringes Maß in die Abtropfrinne eintaucht und zusammen mit der radial äußeren Wandpartie der Abtropfrinne eine Labyrinthdichtung bildet.

Mit Vorteil ist am oberen Ende des haubenförmigen Gehäuseteils eine Öffnung vorgesehen, in die ein Filterelement eingesetzt ist, wobei die durch das Filterelement hindurchtretenden Gase oder Dämpfe in ein auf dem oberen Gehäuseteil aufsitzenden Filtertopf eintreten, der über eine erste Vakuumleitung an die Vakuumquelle angeschlossen ist.

Weitere Einzelheiten und Merkmale der Erfindung sind in den Patentansprüchen näher beschrieben und gekennzeichnet.

Die Erfindung läßt die verschiedensten Ausführungsmöglichkeiten zu; eine davon ist in der anhängenden Zeichnung rein schematisch näher dargestellt.

Die Vorrichtung besteht im wesentlichen aus einem unteren Gehäuseteil 3 mit einem an seinen oberen Rand fest angeordneten Kragen 30, einem oberen Gehäuseteil 6, mit einem Flansch 31 an seinen unteren Rand, einem in den unteren Gehäuseteil 3 eingesetzten Schmelztiegel 5, einer den Schmelztiegel 5 umschließenden Heizspirale 4 mit den elektrischen Leitern 32,33, einem im oberen Gehäuseteil 6 gehaltenen Innenring14, mit einer auf diesem aufsitzenden Abtropfrinne 10, einem oberhalb der Abtropfrinne angeordneten Metalldampfkondensator 8, mit auf dessen Außenfläche befestigter Kühl-/Heizrohrspirale 27, einem auf einer Öffnung des oberen Gehäuseteils 6 aufsitzenden Filtertopf 17, mit Filterelement 16 und einem das Filterelement 16 durchgreifenden Metalldampftemperaturmeßelement 19 mit Fühler 20, einem in den hutförmigen Metalldampfkondensator 8 hineinragenden Metalldampfprallelement 11 und einer Vakuumquelle 7, die über Zweigleitungen 18, 23, 25 an den Vakuumkessel 3, 6 angeschlossen ist.

Die zu destillierende Metallschmelze 29 wird über die Heizspirale 4 soweit erhitzt, dass das zuerst siedende Metall der im Schmelztiege 15 befindlichen Legierung in Dampfform in den Kondensatorraum 34 eintritt und sich an der inneren Mantelfläche des hutförmigen Metalldampfkondensators 8 niederschlägt und anschließend an der Innenfläche nach unten rinnt und sich schließlich in der Abtropfrinne 10 sammelt. Andere Dämpfe, insbesondere von in der Legierung 29 enthaltenen Zusatzstoffen oder Verunreinigungen, werden vom Metalldampfprallelement 11 über den Ringspalt 36 und die Öffnung 15 auf das Filterelement 16 geleitet und dort aufgefangen. Der geschilderte Destillationsprozess setzt voraus, dass im Innenraum des zweiteiligen Vakuumkessels 2 bestimmte Drücke herrschen, weshalb insgesamt drei Vakuumleitungen 18, 23, 25 mit in diese eingeschalteten Ventilen 24, 26, 28 vorgesehen sind, über die die Drücke in den einzelnen Abteilungen des Vakuumkessels 2 einstellbar sind. Die Einstellung der Drücke erfolgt über einen Regler 35 in Abhängigkeit von Meßfühlern 37, 38, 39, die an verschiedenen Stellen der Vorrichtung angebracht sind und über die sowohl die Drücke, als auch Temperaturen registriert werden können. Zum Destillieren der Metallschmelze 29 wird diese überhitzt, wobei gleichzeitig eine Druckreduzierung der über dem Schmelztiegel 5 herrschenden Atmosphäre bewirkt wird. Die Arbeitstemperatur des Metalldampfkondensators 8 wird in Abhängigkeit von der Zusammensetzung der Schmelze 29 und des erzielten Kondensataggregatzustands bestimmt und zwar in den einzelnen Destillationsetappen unterschiedlich und entsprechend der jeweiligen Schmelz/Kondensattemperatur.

### Bezugszeichenliste

### Auflistung der Einzelteile

- 2: Vakuumkessel
- 3: unteres Gehäuseteil
- 4: Heizspirale
- 5: Schmelztiegel
- 6: oberes Gehäuseteil
- 7: Vakuumquelle
- 8: Metalldampfkondensator
- 9: unterer Rand
- 10: Abtropfrinne
- 11: Metalldampfprallelement
- 12: kreiszylindrischer Ring
- 13: Randpartie
- 14: Innenring
- 15: Öffnung
- 16: Filterelement
- 17: Filtertopf
- 18: erste Vakuumleitung
- 19: Metalldampftemperaturmeßelement
- 20: Fühler
- 21: Fühlerarm
- 22: Spulenhinterraum
- 23: zweite Vakuumleitung
- 24: Vakuumventil
- 25: dritte Vakuumleitung
- 26: Ventil
- 27: Kühl-/Heizspirale
- 28: Ventil
- 29: Schmelze
- 30: Kragen
- 31: Flansch
- 32: elektrischer Leiter
- 33: elektrischer Leiter
- 34: Kondensatorraum
- 35: Regler
- 36: Ringspalt
- 37: Meßfühler
- 38: Meßfühler
- 39: Meßfühler

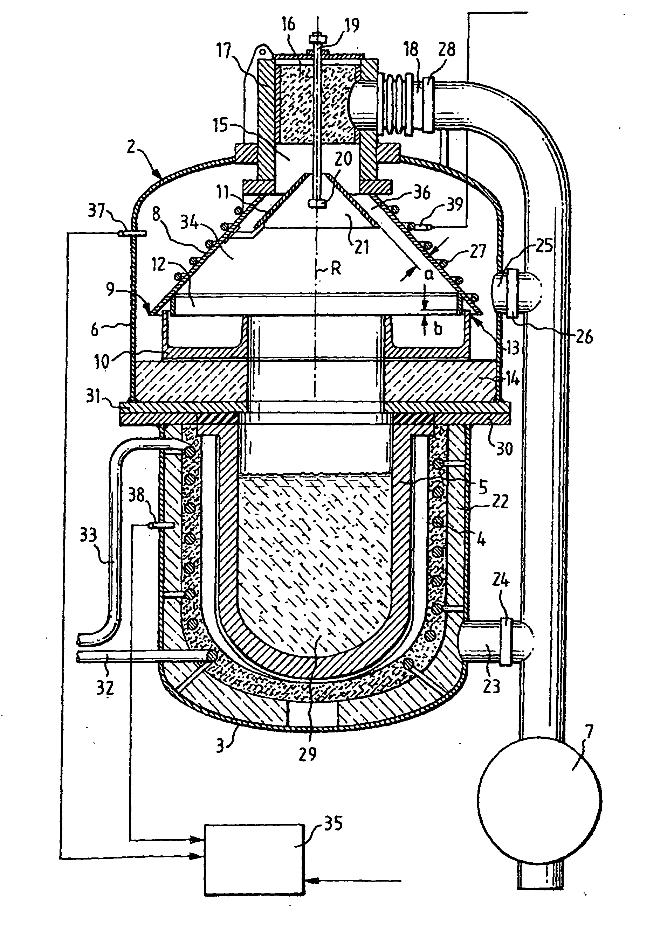

## Patentansprüche

1. Vorrichtung zum Destillieren von Metallschmelzen, mit einem topfförmigen unteren Gehäuseteil (3) zur Aufnahme eines von einer Heizspirale (4) umgriffenen Schmelztiegels (5) und mit einem mit dem unteren Gehäuseteil druckdicht verbindbaren haubenförmigen oberen Gehäuseteil (6), wobei sowohl das untere, als auch das obere Gehäuseteil an eine Vakuumquelle (7) angeschlossen sind und wobei das obere Gehäuseteil einen Metalldampfkondensator (8) in Gestalt eines aus einem Blechzuschnitt geformten Kegelstumpfs aufweist, dessen dem Schmelztiegel zugewandter, vom größeren Grundkreis gebildeter unterer Rand (9) sich unmittelbar oberhalb einer kreisförmigen oder torusförmigen Abtropfrinne (10) oder Abtropfschale befindet, deren sich lotrecht erstreckende Rotationsachse (R) mit derjenigen des kegelstumpfförmigen Metalldampfkondensators (8) zusammenfällt, wobei ein kugelschalenförmiges oder kegelstumpfförmiges Metalldampfprallelement (11) im oberen Teil des Metalldampfkondensators nahe des Brennpunkts seiner kegelstumpfförmigen Mantelfläche angeordnet ist, wobei sich die Mantelfläche des Metalldampfprallelements (11) mit geringem Abstand (a) zur Innenfläche des Metalldampfkondensators (8) erstreckt.

2. Vorrichtung nach Anspruch 1, **dadurch gekennzeichnet, dass** der Metalldampfkondensator (8) an seinem dem Schmelztiegel (5) zugewandten unteren Rand (9) mit einer Abtropfkante in Gestalt eines, mit dem Blechzuschnitt fest verbundenen kreiszylindrischen Rings (12) versehen ist, dessen dem Schmelztiegel zugewandte Randpartie (13) um ein geringes Maß (b) in die Abtropfrinne (10) eintaucht und zusammen mit der radial äußeren Wandpartie der Abtropfrinne eine Labyrinthdichtung bildet.

3. Vorrichtung nach den Ansprüchen 1 und 2, **dadurch gekennzeichnet, dass** die Abtropfrinne (10) auf einem etwa kreisringzylinderförmigen Innenring (14) aus feuerfestem Werkstoff ruht, der seinerseits vom haubenförmigen oberen Gehäuseteil (6) gehalten ist.

4. Vorrichtung nach den Ansprüchen 1 bis 3, **dadurch gekennzeichnet, dass** am oberen Ende des haubenförmigen Gehäuseteils (6) eine Öffnung (15) vorgesehen ist, in die ein Filterelement (16) eingesetzt ist, wobei die durch das Filterelement hindurchtretenden Gase oder Dämpfe in ein auf dem oberen Gehäuseteil (6) aufsitzenden Filtertopf (17) eintreten, der über eine erste Vakuumleitung (18) an die Vakuumquelle (7) angeschlossen ist.

5. Vorrichtung nach einem oder mehreren der vorhergehenden Ansprüche, **dadurch gekennzeichnet, dass** am oberen haubenförmigen Gehäuseteil (6) oder am Filtertopf (17) ein Metalldampftemperaturmeßelement (19) angeordnet ist, dessen Fühler (20) sich bis in den vom Metalldampfprallelement (11) umschlossenen Raum (21) hineinstreckt.

6. Vorrichtung nach einem oder mehreren der vorhergehenden Ansprüche, **dadurch gekennzeichnet, dass** der Raum (22) zwischen dem topfförmigen unteren Gehäuseteil (3) und der Heizspirale (4) über eine zweite Vakuumleitung (23) an die Vakuumquelle (7) angeschlossen ist, wobei in die zweite Vakuumleitung (23) ein Vakuumventil (24) eingeschaltet ist.

7. Vorrichtung nach einem oder mehreren der vorhergehenden Ansprüche, **dadurch gekennzeichnet, dass** das obere haubenförmige Gehäuseteil (6) mit einer dritten Vakuumleitung (25) verbunden ist, die etwa im Bereich des unteren Randes (9) des Metalldampfkondensators (8) in das obere Gehäuseteil (6) einmündet, wobei in die an die Vakuumquelle (7) angeschlossene dritte Vakuumleitung (25) ein Absperrorgan oder ein Ventil (26) eingeschaltet ist.

8. Vorrichtung nach einem oder mehreren der vorhergehenden Ansprüche, **dadurch gekennzeichnet, dass** die äußere Mantelfläche des Blechzuschnitts des Metalldampfkondensators (8) mit einer Kühl- oder Heizrohrleitungsspirale (27) versehen ist.

## Claims

1. Apparatus for distilling molten metal, with a pot-shaped lower casing-part (3) to hold a melting crucible (5) surrounded by a heating coil (4) and with a bonnet-shaped upper casing-part (6) connectable to the lower casing-part with a pressure-tight seal, both lower and upper casing-parts being connected to a vacuum source (7) and the upper casing-part having a metal vapour condenser (8) in the shape of a frustum of a cone, formed from a cut-to-shape sheet-metal blank, whose lower rim (9) facing towards the melting crucible and formed by the major fundamental circle of the said frustum is located immediately above a circular or toroidal collecting trough (10) or tray whose vertically extending rotational axis (R) coincides with that of the said frustum of the metal vapour condenser (8), a metal vapour baffle element (11) in the shape of a spherical cup or frustum of a cone being arranged in the upper part of the metal vapour condenser close to the focal point of its frustum-shaped wall surface, the wall surface of the metal vapour baffle element (11) extending with a small clearance (a) from the inner surface of the metal vapour condenser (8).

2. Apparatus according to Claim 1, **characterized in that** the metal vapour condenser (8) is provided at its lower rim (9) facing towards the melting crucible (5) with a drip edge in the shape of a circular-cylindrical ring (12) permanently joined to the shaped sheet-metal component, the edge portion (13) of the said ring facing towards the melting crucible dipping into the collecting trough (10) by a small distance (b) and forming, together with the radially outer wall portion of the collecting trough, a labyrinth seal.

3. Apparatus according to Claims 1 and 2, **characterized in that** the collecting trough (10) rests on an approximately circular-ring-cylindrical inner ring (14) of refractory material which in turn is retained by the bonnet-shaped upper casing-part (6).

4. Apparatus according to Claims 1 to 3, **characterized in that** an opening (15) into which a filter element (16) is inserted is provided at the upper end of the bonnet-shaped casing-part (6), the gases or vapours passing through the filter element entering a filter pot (17) which is mounted on the upper casing-part (6) and is connected via a first vacuum line (18) to the vacuum source (7).

5. Apparatus according to one or more of the preceding claims, **characterized in that** a metal vapour temperature measuring element (19), whose sensor (20) reaches into the space (21) surrounded by the metal vapour baffle element (11), is arranged on the upper bonnet-shaped casing-part (6) or on the filter pot (17).

6. Apparatus according to one or more of the preceding claims, **characterized in that** the space (22) between the pot-shaped lower casing-part (3) and the heating coil (4) is connected via a second vacuum line (23) to the vacuum source (7), a vacuum valve (24) being fitted in the second vacuum line (23).

7. Apparatus according to one or more of the preceding claims, **characterized in that** the upper bonnet-shaped casing-part (6) is connected to a third vacuum line (25) and communicating with the upper casing-part (6) approximately in the region of the lower rim (9) of the metal vapour condenser (8), a shut-off device or valve (26) being fitted in the third vacuum line (25) connected to the vacuum source (7).

8. Apparatus according to one or more of the preceding claims, **characterized in that** the outer shell-surface of the shaped sheet-metal component of the metal vapour condenser (8) is provided with a cooling or heating tube coil (27).

## Revendications

1. Dispositif pour la distillation de bains de métaux fondus, comprenant une partie inférieure d'enveloppe (3) en forme de pot, destinée à recevoir un creuset de fusion (5) entouré d'une spirale de chauffage (4) et une partie supérieure d'enveloppe (6) en forme de dôme, qui peut être assemblée à la partie inférieure d'enveloppe à joint étanche à la pression, dans lequel aussi bien la partie supérieure d'enveloppe que la partie inférieure d'enveloppe sont raccordées à une source de vide (7) et la partie supérieure d'enveloppe présente un condenseur de vapeurs métalliques (8) ayant la forme d'un tronc de cône formé d'un flan de tôle, dont le bord inférieur (9) dirigé vers le creuset de fusion, formé par le grand cercle de base, se trouve directement au-dessus d'une gouttière d'égouttage (10) ou coquille d'égouttage, circulaire ou torique, dont l'axe de révolution (R) s'étendant verticalement est confondu avec celui du condenseur de vapeurs métalliques tronconique (8), dans lequel une chicane de vapeurs métalliques en forme de calotte sphérique ou de tronc de cône (11) est disposée dans la partie supérieure du condenseur de vapeurs métalliques à proximité du foyer de sa paroi latérale, la paroi latérale de la chicane de vapeurs métalliques (11) s'étendant à petite distance (a) de la surface intérieure du condenseur de vapeurs métalliques (8).

2. Dispositif selon la revendication 1, **caractérisé en ce que** le condenseur de vapeurs métalliques (8) est muni, à son bord inférieur (9) dirigé vers le creuset de fusion (5), d'un bord d'égouttage ayant la forme d'un anneau cylindrique à base circulaire (12), relié rigidement au flan de tôle, dont la partie de bord (13) dirigée vers le creuset de fusion plonge dans la gouttière d'égouttage (10) sur une petite distance (b) et forme un joint à labyrinthe en combinaison avec la partie de paroi radialement extérieure de la gouttière d'égouttage.

3. Dispositif selon les revendications 1 et 2, **caractérisé en ce que** la gouttière d'égouttage (10) repose sur un anneau intérieur (14) en matière réfractaire, qui est à peu près en forme de cylindre à base de couronne de cercle, et qui est de son côté maintenu par la partie supérieure d'enveloppe (6) en forme de dôme.

4. Dispositif selon les revendications 1 à 3, **caractérisé en ce qu'**à l'extrémité supérieure de la partie d'enveloppe (6) en forme de dôme, est prévue une ouverture (15) dans laquelle est emboîté un élément filtrant (26), les gaz ou vapeurs qui traversent l'élément filtrant pénétrant dans un pot de filtre (17) qui repose sur la partie supérieure d'enveloppe (6), et qui est raccordé à la source de vide (7) au moyen d'une première conduite de vide (18).

5. Dispositif selon une ou plusieurs des revendications précédentes, **caractérisé en ce qu'**au niveau de la partie supérieure d'enveloppe (6) en forme de dôme ou du pot de filtre (17) est disposé un élément de mesure de la température des vapeurs métalliques (19) dont le capteur (20) s'étend jusque dans l'espace (21) entouré par la chicane de vapeurs métalliques (11).

6. Dispositif selon une ou plusieurs des revendications précédentes, **caractérisé en ce que** l'espace (22) compris entre la partie inférieure d'enveloppe (3) en forme de pot et la spirale de chauffage (4) est raccordé à la source de vide (7) par une deuxième conduite de vide (23), une vanne de vide (24) étant intercalée dans la deuxième conduite de vide (23).

7. Dispositif selon une ou plusieurs des revendications précédentes, **caractérisé en ce que** la partie supérieure d'enveloppe (6) en forme de dôme est reliée à une troisième conduite de vide (25) qui débouche dans la partie supérieure d'enveloppe (6) à peu près dans la région du bord inférieur (9) du condenseur de vapeurs métalliques (8), un organe d'arrêt ou une vanne (26) étant intercalé dans la troisième conduite de vide (25) raccordée à la source de vide (7).

8. Dispositif selon une ou plusieurs des revendications précédentes, **caractérisé en ce que** la surface de paroi extérieure du flan de tôle du condenseur de vapeurs métalliques (8) est munie d'une spirale de conduite tubulaire de refroidissement ou de chauffage (27).
